# EUROPEAN PATENT APPLICATION

(11) **EP 4 707 471 A1**
(43) Date of publication of application: **11.03.2026**
(21) Application number: 24839525.3
(22) Date of filing: 26.06.2024
(51) Int. Cl.: E02F 9/00, B60K 8/00, B60K 15/063, B60L 50/70, H01M 8/00, H01M 8/04

(54) **WORK MACHINE**

(30) Priority: 07.07.2023 JP 2023112479; 20.09.2023 JP 2023152359
(71) Applicant: KOBELCO CONSTRUCTION MACHINERY CO., LTD., Hiroshima-shi, Hiroshima 731-5161 (JP)
(72) Inventor: KAMADA, Masashi, Hiroshima-shi, Hiroshima 731-5161 (JP); KUGATA, Yuichi, Hiroshima-shi, Hiroshima 731-5161 (JP)
(74) Representative: TBK
(86) International application number: PCT/JP2024/023216
(87) International publication number: WO 2025/013632

(57) **Abstract**

Provided is a work machine (100), wherein a fuel pipe (40A) is disposed at a position offset from a high-voltage inter-device space (50S) between a first high-voltage device (51) and a second high-voltage device (52) of a high-voltage device group (50) and a hydraulic inter-device space (60S) between a first hydraulic device (61) and a second hydraulic device (62) of a hydraulic device group (60), a high-voltage cable (50A) is disposed at a position offset from the inter-fuel device space (40S) between a fuel tank (41) and a fuel cell device (42) of the fuel device group (40) and the hydraulic inter-device space (60S), and a hydraulic pipe (60A) is disposed at a position offset from the inter-fuel device space (40S) and the high-voltage inter-device space (50S).

## Description

### Technical Field

The present disclosure relates to a work machine including a fuel cell device.

### Background Art

In general, a work machine such as a hydraulic excavator includes a lower travelling body, an upper slewing body swingably supported by the lower travelling body, a work device including a boom swingably supported by the upper slewing body, a hydraulic device group, an engine as a power source, and a cab.

For example, Patent Literature 1 discloses a work machine including a frame, at least one work tool, a coupling assembly movably coupled to the work tool and the frame, an energy recovery system including an energy storage system, and an engine. The energy storage system of the work machine includes at least one of a hydraulic accumulator, a battery, a flywheel, an ultracapacitor, a fuel cell and an auxiliary power unit.

When a fuel cell device is employed as a power source instead of an internal combustion engine such as a diesel engine or a gasoline engine in a work machine, the following problem occurs. A work machine including a fuel cell device as a power source includes a fuel device group and a high-voltage device group in addition to a hydraulic device group, the fuel device group includes, for example, a fuel tank and a fuel cell device, and the high-voltage device group includes, for example, an electric motor to which electric power output from the fuel cell device is supplied and peripheral devices thereof. The hydraulic device group, the fuel device group, and the high-voltage device group need to be disposed in a limited space on the slewing frame. Specifically, these device groups need to be disposed in a limited space in the space on the slewing frame except for the area where the cab is disposed and the area where the base end portion of the boom is mounted, and moreover, the fuel cell device and the fuel tank (for example, hydrogen tank) included in the fuel device group need a relatively large installation space. Therefore, when a fuel cell device is employed as a power source instead of the internal combustion engine, it is necessary to efficiently dispose a fuel device group, a high-voltage device group, and a hydraulic device group in a limited space on the slewing frame.

The technique described in Patent Literature 1 does not take into consideration the above problems regarding the arrangement of the fuel device group, the high-voltage device group, and the hydraulic device group.

### Citation List

### Patent Literatures

Patent Literature 1: JP 2014-9589 A

### Summary of Invention

An object of the present disclosure is to provide a work machine capable of efficiently disposing a fuel device group, a high-voltage device group, and a hydraulic device group in a limited space on a slewing frame.

A work machine according to a first aspect includes a fuel device group that includes a fuel tank and a fuel cell device, a high-voltage device group that includes a first high-voltage device and a second high-voltage device, a hydraulic device group that includes a first hydraulic device and a second hydraulic device, a fuel pipe that connects the fuel tank and the fuel cell device, a high-voltage cable that connects the first high-voltage device and the second high-voltage device, and a hydraulic pipe that connects the first hydraulic device and the second hydraulic device, in which the fuel pipe is disposed at a position offset from a high-voltage inter-device space between the first high-voltage device and the second high-voltage device and a hydraulic inter-device space between the first hydraulic device and the second hydraulic device, the high-voltage cable is disposed at a position offset from an inter-fuel device space between the fuel tank and the fuel cell device and the hydraulic inter-device space, and the hydraulic pipe is disposed at a position offset from the inter-fuel device space and the high-voltage inter-device space.

### Brief Description of Drawings

FIG. 1 is a left side view illustrating a work machine according to an embodiment.
FIG. 2 is a right side view illustrating the work machine.
FIG. 3 is a perspective view of an upper slewing body of the work machine as viewed from diagonally behind on the left.
FIG. 4 is a perspective view of an upper slewing body of the work machine as viewed from diagonally front right.
FIG. 5 is a plan view illustrating a fuel-related area, a high-voltage-related area, a hydraulic-related area, and a cooling-related area on a slewing frame of the upper slewing body.
FIG. 6 is a diagram illustrating the inside of a machine chamber of the work machine, and is a cross-sectional view taken along line A-A in FIG. 1.
FIG. 7 is a perspective view illustrating a positional relationship between a fuel device group and a high-voltage device group in the machine chamber.
FIG. 8 is a diagram illustrating the inside of a machine chamber in a work machine according to a first modification of the embodiment.
FIG. 9 is a diagram illustrating the inside of a machine chamber in a work machine according to a second modification of the embodiment.
FIG. 10 is a diagram illustrating the inside of a machine chamber in a work machine according to a third modification of the embodiment.
FIG. 11 is a diagram illustrating the inside of a machine chamber in a work machine according to a fourth modification of the embodiment.
FIG. 12 is a block diagram illustrating a fuel device group, a high-voltage device group, and a hydraulic device group.

### Description of Embodiments

A work machine 100 according to an embodiment of the present disclosure will be described with reference to the drawings.

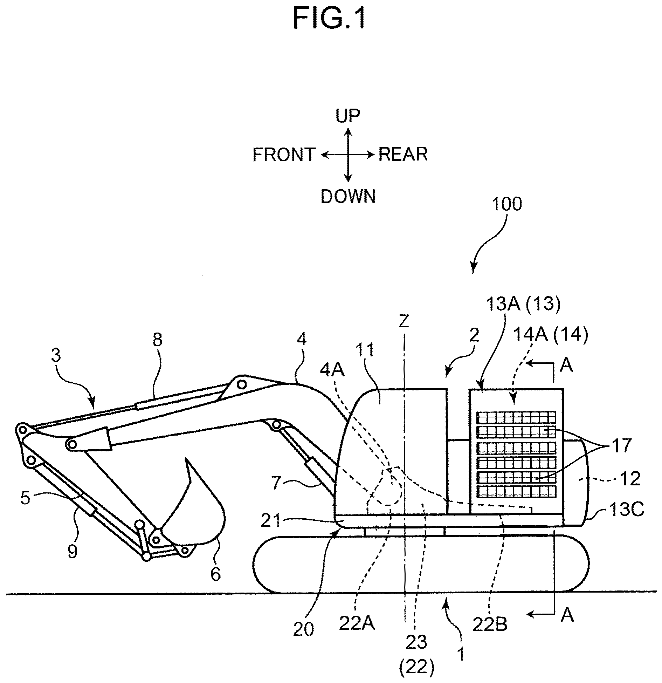

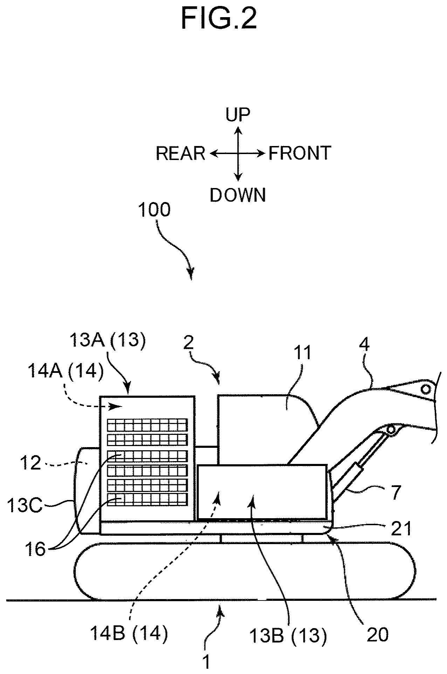

As illustrated in FIGS. 1 and 2, the work machine 100 includes a lower travelling body 1 including a travelling device, an upper slewing body 2 supported by the lower travelling body 1 so as to be swingable with respect to the lower travelling body 1 about a slewing axis Z extending vertically, and a work device 3 supported by the upper slewing body 2. Although the work machine 100 according to the present embodiment is a hydraulic excavator, a work machine in the present disclosure is not limited to a hydraulic excavator, and may be another work machine such as a crane or a bulldozer. The travelling device may be a crawler type travelling device illustrated in FIG. 1, or may be a travelling device having a tire (not illustrated).

The work device 3 includes a boom 4 attached to the upper slewing body 2 so as to be raised and lowered, an arm 5 swingably attached to the boom 4, and a distal end attachment 6 swingably attached to the arm 5. Although the distal end attachment 6 in the present embodiment is a bucket, the distal end attachment may be, for example, another distal end attachment such as a grapple, a fork, or a crusher.

The upper slewing body 2 includes a slewing frame 20, a cab 11 supported by the slewing frame 20, a counterweight 12, and an outer wall 13. The outer wall 13 has, for example, a box shape and defines the machine chamber 14. Various components are accommodated in the machine chamber 14. Various components accommodated in the machine chamber 14 will be described later.

The slewing frame 20 is a member swingably supported on the lower travelling body 1. The slewing frame 20 includes a frame body 21 and a standing body 22. The frame body 21 supports the cab 11, the counterweight 12, and the outer wall 13. The standing body 22 supports a boom 4 such that the boom 4 can be raised and lowered. The standing body 22 includes a boom attachment portion 22A to which a base end portion 4A of the boom 4 indicated by a broken line in FIG. 1 is attached. The boom attachment portion 22A constitutes a front portion of the standing body 22.

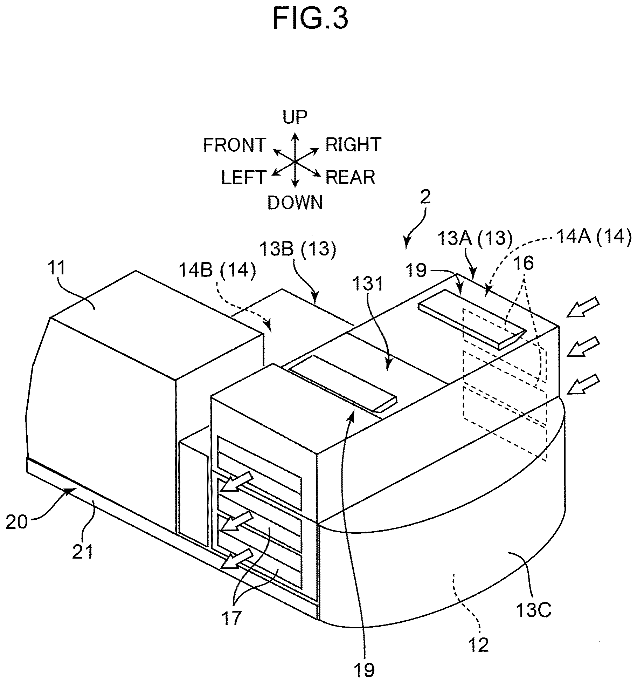

As illustrated in FIGS. 3 to 5, the cab 11 is disposed, for example, at a left front portion of the frame body 21. The counterweight 12 is a weight for balancing and is disposed at the rear portion of the frame body 21 or behind the frame body 21. A driver's seat, an operation lever, an operation pedal, and the like are disposed in the cab 11.

The standing body 22 has a shape that stands upright from the frame body 21 and extends forward and backward as indicated by a broken line in FIG. 1. The standing body 22 includes a rear portion 22B positioned behind the boom attachment portion 22A (front portion). The rear portion 22B is located behind the boom attachment portion 22A and is lower in height than the boom attachment portion 22A. The rear portion 22B of the standing body 22 can be omitted.

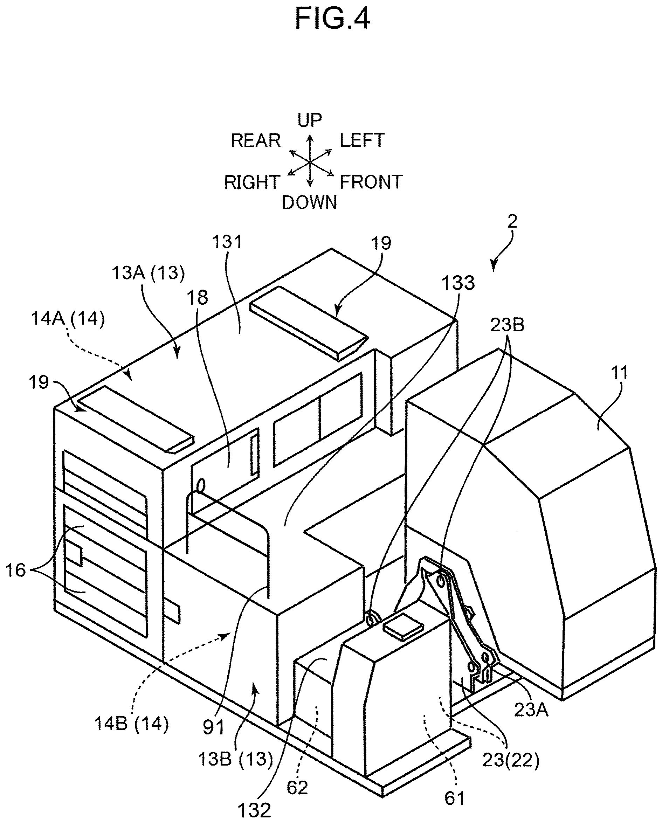

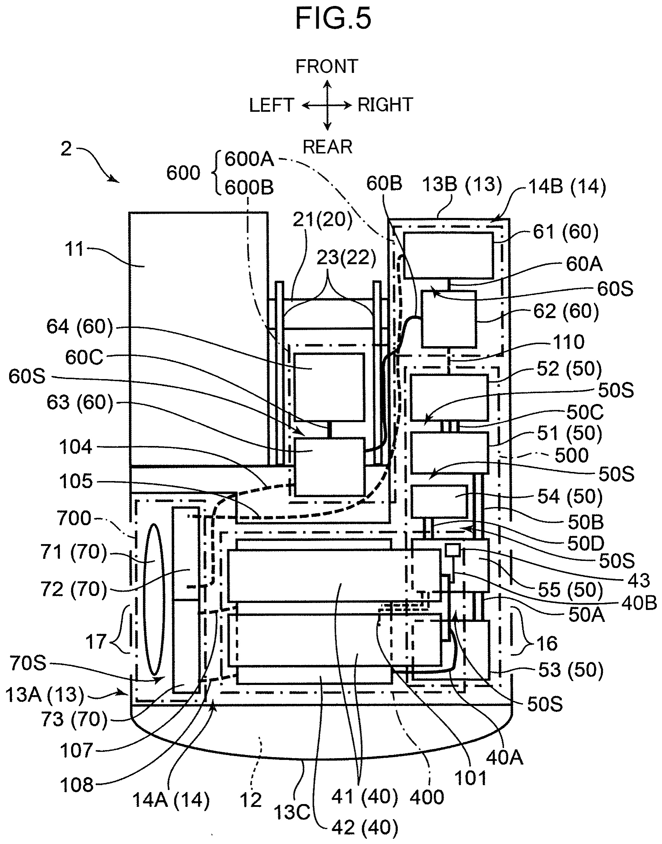

In the present embodiment, as illustrated in FIGS. 1 and 5, the standing body 22 includes left and right standing plates 23 and 23 facing each other with an interval therebetween in the left and right directions. Each of the left and right standing plates 23 and 23 is a plate-like member standing upright from the frame body 21, and extends forward and backward from the front end to the rear end. As illustrated in FIG. 4, each of the left and right standing plates 23 is formed with an insertion hole 23A through which a coupling pin rotatably coupling the base end portion of the boom cylinder 7 is inserted, and an insertion hole 23B through which a coupling pin rotatably coupling the base end portion 4A of the boom 4 is inserted.

The work machine 100 includes a plurality of actuators. Each of the plurality of actuators operates by receiving supply of hydraulic oil discharged from a hydraulic pump 62 (see FIG. 5) described later. The plurality of actuators include a boom cylinder 7 for raising and lowering the boom 4, an arm cylinder 8 for rotating the arm 5, a distal end attachment cylinder 9 for rotating the distal end attachment 6, and a hydraulic motor 64 (see FIG. 5) for swinging the upper slewing body 2 with respect to the lower travelling body 1.

The machine chamber 14 is formed in a space of the upper surface of the frame body 21 excluding an area in which the cab 11 is disposed, an area in which the base end portion 4A of the boom 4 is mounted, and an area in which the counterweight 12 is disposed. The machine chamber 14 is formed in, for example, a space behind the cab 11 and a space on a side (for example, a right side) of the cab 11.

Specifically, as illustrated in FIGS. 3 to 5, the machine chamber 14 includes a rear machine chamber 14A and a side machine chamber 14B. The rear machine chamber 14A is a housing space formed along the rear surface of the upper slewing body 2 behind the cab 11. The side machine chamber 14B is a housing space formed along a side surface (for example, a right side surface) of the upper slewing body 2 on a side (for example, a right side) of the cab 11. In a case where the weight of the device accommodated in the rear machine chamber 14A is large, the counterweight 12 can be omitted.

The outer wall 13 includes a rear outer wall 13A defining the rear machine chamber 14A and a side outer wall 13B defining the side machine chamber 14B. Each of the rear outer wall 13A and the side outer wall 13B has, for example, a box shape.

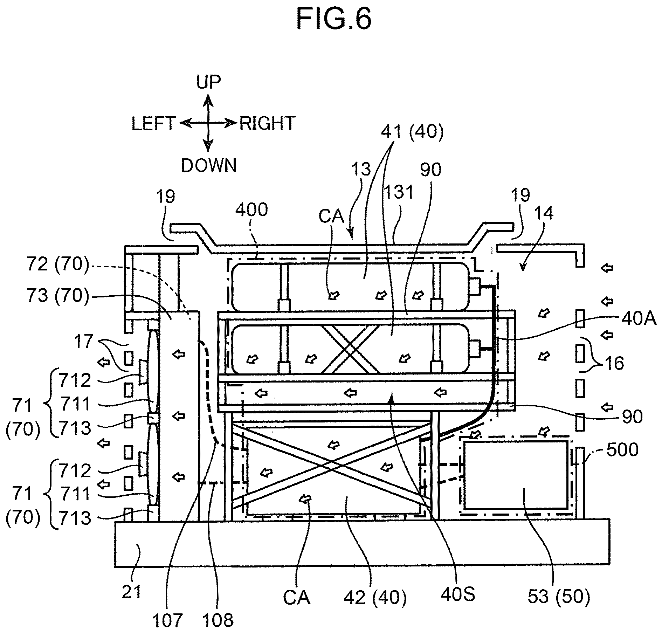

As illustrated in FIGS. 1 to 6, an intake port 16 and an exhaust port 17 are formed in the outer wall 13. The intake port 16 is an opening through which air outside the machine chamber 14 is taken into the machine chamber 14 as cooling air CA (see FIG. 6). The exhaust port 17 is an opening for discharging cooling air CA inside machine chamber 14 to the outside of the machine chamber 14. A portion where each of the intake port 16 and the exhaust port 17 is formed is not particularly limited, but in the present embodiment, the intake port 16 is formed in a side portion (for example, a right side portion) of the outer wall 13, and the exhaust port 17 is formed in another side portion (for example, a left side portion) of the outer wall 13.

The outer wall 13 may further include a weight outer wall 13C covering the counterweight 12. However, the weight outer wall 13C may constitute the counterweight itself. The weight outer wall 13C may constitute a part of the rear outer wall 13A.

The work machine 100 includes a plurality of device groups and a plurality of connection members. Each of the plurality of connection members is a member such as a pipe or a cable for connecting devices included in a device group corresponding to the connection member. As illustrated in FIG. 5, the plurality of device groups include a fuel device group 40, a high-voltage device group 50, and a hydraulic device group 60, and the plurality of connection members include at least one fuel pipe, at least one high-voltage cable, and at least one hydraulic pipe. The plurality of device groups may further include a cooling device group 70.

As illustrated in FIG. 5, in the present embodiment, the fuel device group 40 and the at least one fuel pipe are disposed in a fuel-related area 400 surrounded by an alternate long and short dash line, the high-voltage device group 50 and the at least one high-voltage cable are disposed in a high-voltage-related area 500 surrounded by an alternate long and short dash line, and the hydraulic device group 60 and the at least one hydraulic pipe are disposed in a hydraulic-related area 600 surrounded by an alternate long and short dash line. The cooling device group 70 is disposed in a cooling-related area 700 surrounded by an alternate long and short dash line.

### [Fuel device group]

The fuel device group 40 includes a hydrogen tank 41, a fuel cell device 42, and a hydrogen filling port 43. The at least one fuel pipe includes a fuel pipe 40A that connects the hydrogen tank 41 and the fuel cell device 42, and a fuel pipe 40B (hydrogen filling pipe) that connects the hydrogen filling port 43 to the hydrogen tank 41.

The hydrogen tank 41 is a container for storing hydrogen. The hydrogen tank 41 is an example of a fuel tank. When the fuel cell device 42 generates power using fuel other than hydrogen, the fuel tank may be a container for storing fuel other than hydrogen. In the present embodiment, the hydrogen tank 41 is disposed above the fuel cell device 42.

The high-pressure hydrogen stored in the hydrogen tank 41 is supplied to a pressure reducing valve (not illustrated) via the fuel pipe 40A, and is decompressed in the pressure reducing valve. The depressurized hydrogen (hydrogen gas) is supplied to the fuel cell device 42 through the fuel pipe 40A. The hydrogen tank 41 may be, for example, a resin tank. Examples of the resin tank include a type-4 resin tank. The type-4 resin tank has a carbon fiber-reinforced plastic wound around the outside of a resin container, and has high strength. However, the hydrogen tank 41 is not limited to the type-4 resin tank, and may be another resin tank or a tank other than the resin tank.

The fuel cell device 42 includes a fuel cell that generates electric power by electrochemically reacting hydrogen (hydrogen gas) supplied from the hydrogen tank 41 with oxygen (for example, oxygen contained in air). The fuel cell includes, for example, a fuel cell stack including a plurality of cells.

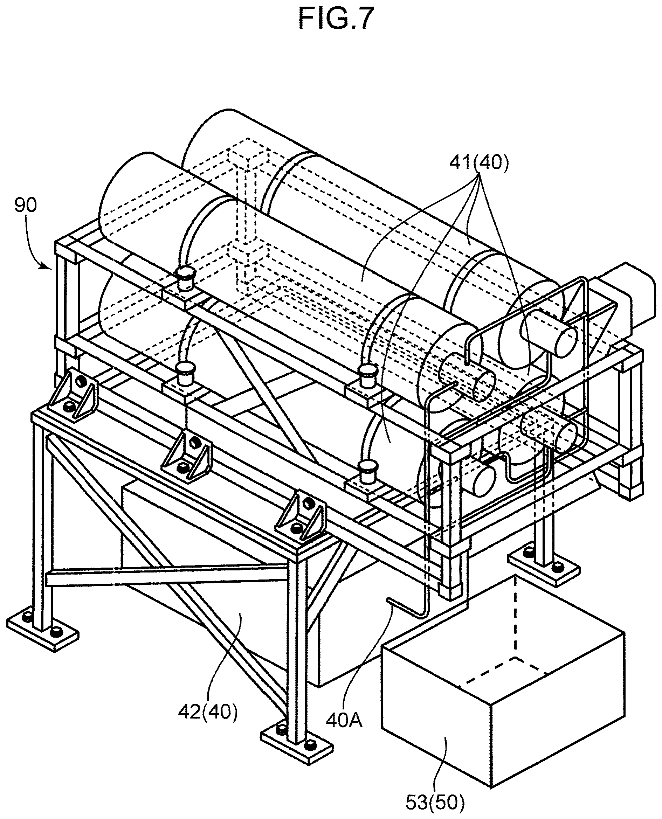

As illustrated in FIGS. 6 and 7, the hydrogen tank 41 of the fuel device group 40 may be supported by a support member 90 in the machine chamber 14.

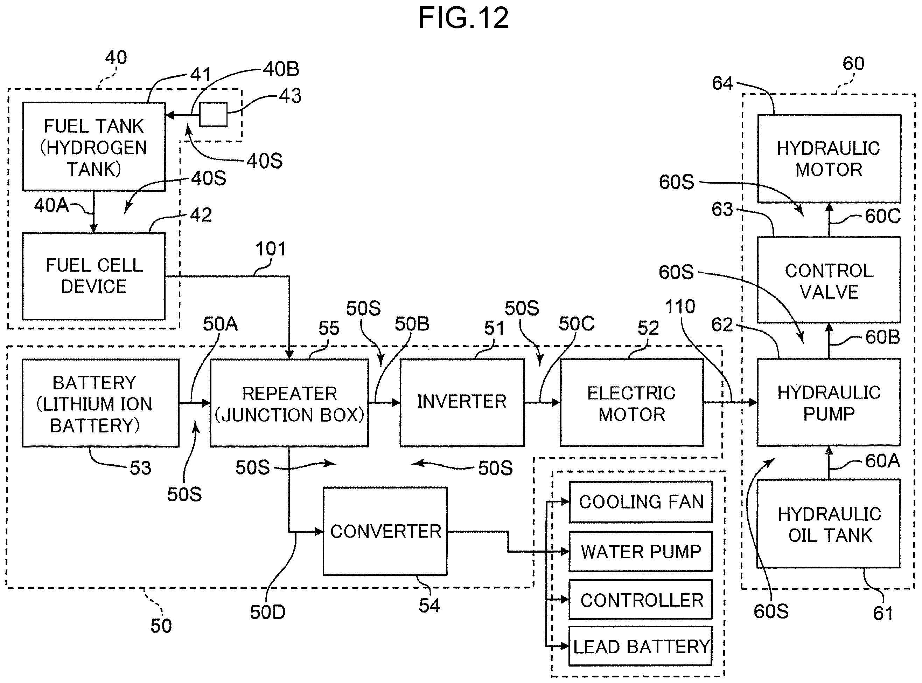

As illustrated in FIGS. 5 and 12, the hydrogen filling port 43 is connected to the hydrogen tank 41 via the fuel pipe 40B (hydrogen filling pipe). The fuel pipe 40B may extend from the hydrogen filling port 43 and be directly connected to the hydrogen tank 41. The fuel pipe 40B may extend from the hydrogen filling port 43, be connected to another pipe such as the fuel pipe 40A, and be connected to the hydrogen tank 41 via the other pipe. The hydrogen filling port 43 has a filling port communicating with the fuel pipe 40B.

The hydrogen filling port 43 is disposed, for example, near the hydrogen tank 41. As illustrated in FIG. 4, the outer wall 13 has a filling opening/closing door 18 formed at a position adjacent to the hydrogen filling port 43. In the specific example illustrated in FIG. 4, the filling opening/closing door 18 is formed on the front surface of the rear outer wall 13A of the outer wall 13, but the formation position of the filling opening/closing door 18 is not limited to the specific example illustrated in FIG. 4.

When the filling opening/closing door 18 is closed, the hydrogen filling port 43 is covered with the outer wall 13 including the filling opening/closing door 18 and is not exposed to the outside. Therefore, when the filling operation for filling the hydrogen tank 41 with hydrogen is not performed, adhesion of foreign matter such as dust to the hydrogen filling port 43 can be suppressed. In the filling operation of filling the hydrogen tank 41 with hydrogen, a nozzle of a hydrogen gas filling device (not illustrated) can be connected to the hydrogen filling port 43 by opening the filling opening/closing door 18, and the hydrogen tank 41 is filled with hydrogen by connecting the nozzle of the hydrogen gas filling device to the hydrogen filling port 43. When the filling of the hydrogen tank 41 with hydrogen is completed, the nozzle of the hydrogen gas filling device is removed from the hydrogen filling port 43, and the filling opening/closing door 18 is closed.

As illustrated in FIG. 4, a handrail 91 is disposed on the outer wall 13. The handrail 91 is used when an operator performs a filling operation. The operator can efficiently perform the filling operation while holding the handrail 91 and stabilizing the posture. The handrail 91 is disposed in a portion of the outer wall 13 near the filling opening/closing door 18. In the specific example illustrated in FIG. 4, since the operator performs the filling operation on a filling operation surface 133 which is the upper surface of the outer wall 13 positioned in front of the filling opening/closing door 18, the handrail 91 is disposed at the end portion (right end portion in FIG. 4) of the filling operation surface 133. Since the outer wall 13 further has an upper surface 132 at a position adjacent to the filling operation surface 133 (a position in front of the filling operation surface 133 in FIG. 4), at a position lower than the filling operation surface 133, and at a position higher than the ground surface, the operator can easily ascend from the ground surface to the filling operation surface 133 via the upper surface 132, and can easily descend from the filling operation surface 133 to the ground via the upper surface 132.

### [High-voltage device group]

The high-voltage device group 50 includes an inverter 51 and an electric motor 52. The inverter 51 is an example of a first high-voltage device, and the electric motor 52 is an example of a second high-voltage device. The at least one high-voltage cable includes a high-voltage cable 50C that connects the inverter 51 and the electric motor 52.

The inverter 51 is connected to the fuel cell device 42. The inverter 51 converts a direct current supplied from the fuel cell device 42 into a three-phase alternating current and supplies the three-phase alternating current to the electric motor 52. The inverter 51 adjusts the rotation speed of the electric motor 52.

The electric motor 52 is a drive source that drives a hydraulic pump 62 described later. The electric motor 52 operates by receiving power supplied from the fuel cell device 42 via the inverter 51. The electric motor 52 is configured by, for example, a three-phase motor.

The high-voltage device group 50 may further include a battery 53. The battery 53 may be, for example, a lithium ion battery, or may be another type of battery. The electric motor 52 may operate by receiving supply of electric power output from the battery 53 via the inverter 51. The inverter 51 may convert the direct current supplied from the battery 53 into a three-phase alternating current and supply the three-phase alternating current to the electric motor 52. In addition, the battery 53 may be charged by receiving power supply from the fuel cell device 42.

The high-voltage device group 50 may further include a repeater 55 (junction box 55). As illustrated in FIG. 12, the repeater 55 has a function of merging power output from the fuel cell device 42 and power output from the battery 53, and a function of distributing power to a plurality of high-voltage devices such as the inverter 51 and the converter 54 described later. In the present embodiment, the fuel cell device 42 is connected to the repeater 55 via a power supply cable 101.

The high-voltage device group 50 may further include the converter 54 (DC-DC converter). The converter 54 steps down the high-voltage output from the repeater 55. The converter 54 supplies the stepped-down low-voltage power to the low-voltage device group. In the specific example illustrated in FIG. 12, the low-voltage device group includes a cooling fan 71, a water pump, a controller, and a lead battery. The cooling fan 71 will be described later. The water pump circulates cooling water between the fuel cell device 42 and a radiator 73 described later through radiator hoses 107 and 108 described later. The controller controls the operation of the work machine 100. However, the low-voltage device group is not limited to these specific examples.

As illustrated in FIG. 12, the at least one high-voltage cable may further include a high-voltage cable 50A that connects the battery 53 and the repeater 55, a high-voltage cable 50B that connects the repeater 55 and the inverter 51, and a high-voltage cable 50D that connects the repeater 55 and the converter 54, in addition to a high-voltage cable 50C that connects the inverter 51 and the electric motor 52.

In addition, the high-voltage device group 50 may further include a compressor (not illustrated), and may further include a heater (not illustrated). The compressor is, for example, a device that compresses a vaporized refrigerant, and is included in an air conditioner for adjusting a temperature in the cab 11. The heater may include at least one of an electric heater constituting a heating device for heating the inside of the cab 11, an electric heater for preheating the battery 53, and an electric heater for preheating the hydraulic oil.

### [Hydraulic device group]

The hydraulic device group 60 includes a hydraulic oil tank 61 and a hydraulic pump 62. The hydraulic oil tank 61 is an example of a first hydraulic device, and the hydraulic pump 62 is an example of a second hydraulic device. The at least one hydraulic pipe includes a hydraulic pipe 60A that connects the hydraulic oil tank 61 and the hydraulic pump 62.

The hydraulic oil tank 61 is a container that stores hydraulic oil. The hydraulic pump 62 is driven by the electric motor 52 to discharge hydraulic oil. The hydraulic pump 62 is connected to the electric motor 52 via an axial connection coupling 110.

The hydraulic device group 60 may further include a control valve 63 and a hydraulic motor 64. In this case, the at least one hydraulic pipe may further include a hydraulic pipe 60B connecting the hydraulic pump 62 and the control valve 63, and a hydraulic pipe 60C connecting the control valve 63 and the hydraulic motor 64. The hydraulic motor 64 operates by receiving supply of hydraulic oil from the hydraulic pump 62 via the control valve 63. The control valve 63 is opened and closed such that hydraulic oil from the hydraulic pump 62 is supplied to an actuator (for example, the hydraulic motor 64) corresponding to a lever operation or a pedal operation given to an operation device (not illustrated) by an operator.

### [Cooling device group]

The cooling device group 70 includes a cooling fan 71 and a heat exchanger. The heat exchanger may include at least one of an oil cooler 72 and a radiator 73.

The cooling fan 71 forms a flow of the cooling air CA in the machine chamber 14. That is, the cooling fan 71 forms a flow of the cooling air CA from the intake port 16 to the exhaust port 17 in the machine chamber 14. As illustrated in FIG. 6, the cooling fan 71 includes an impeller 711 including a rotary shaft and a plurality of blades arranged along an outer periphery of the rotary shaft, and a fan motor 712 that drives the impeller 711. The impeller 711 of the cooling fan 71 rotates, for example, when electric power is supplied from the fuel cell device 42 or the battery 53 to the fan motor 712 via the repeater 55. The cooling fan 71 may further include a shroud 713 disposed to surround the impeller 711.

The oil cooler 72 may be configured to cool the hydraulic oil discharged from the devices included in the hydraulic device group 60. Specifically, for example, the oil cooler 72 may be connected to the control valve 63 via an oil cooler hose 104, or may be connected to the hydraulic oil tank 61 via an oil cooler hose 105. In this case, the hydraulic oil discharged from the control valve 63 reaches the oil cooler 72 via the oil cooler hose 104, is cooled by heat exchange with the cooling air CA in the oil cooler 72, and flows into the hydraulic oil tank 61 via the oil cooler hose 105. As a result, the hydraulic oil is cooled.

The radiator 73 may be configured to cool the fuel cell device 42. Specifically, for example, the radiator 73 may be connected to the fuel cell device 42 via radiator hoses 107 and 108. The cooling water circulates between the fuel cell device 42 and the radiator 73 by the water pump. The cooling water reaches the radiator 73 via the radiator hose 107, is cooled by heat exchange with the cooling air CA in the radiator 73, and is supplied to the fuel cell device 42 via the radiator hose 108, whereby the fuel cell device 42 is cooled by the cooling water. The cooling water having passed through the fuel cell device 42 returns to the radiator 73 via the radiator hose 107.

Next, the arrangement of the device groups and the connection members in the fuel-related area 400, the high-voltage-related area 500, the hydraulic-related area 600, and the cooling-related area 700 will be specifically described.

### [First Feature]

The work machine 100 according to the present embodiment has the following first feature. Each of the fuel pipes 40A and 40B is disposed at a position offset from a high-voltage inter-device space 50S that is a space between high-voltage devices that are devices included in the high-voltage device group 50, and is disposed at a position offset from a hydraulic inter-device space 60S that is a space between hydraulic devices that are devices included in the hydraulic device group 60. Each of the high-voltage cables 50A, 50B, 50C, and 50D is disposed at a position offset from an inter-fuel device space 40S, which is a space between the fuel devices included in the fuel device group 40, and is disposed at a position offset from the hydraulic inter-device space 60S. Each of the hydraulic pipes 60A, 60B, and 60C is disposed at a position offset from the inter-fuel device space 40S and is disposed at a position offset from the high-voltage inter-device space 50S.

In the present embodiment having the first feature, since the high-voltage cables 50A, 50B, 50C, and 50D and the hydraulic pipes 60A, 60B, and 60C are not interposed between the fuel devices included in the fuel device group 40, it is possible to suppress an increase in the interval between the fuel devices due to the high-voltage cables 50A, 50B, 50C, and 50D and the hydraulic pipes 60A, 60B, and 60C. Specifically, the interval between the hydrogen tank 41 and the fuel cell device 42 disposed adjacently to each other and the interval between the hydrogen tank 41 and the hydrogen filling port 43 disposed adjacently to each other are prevented from increasing due to the high-voltage cables 50A, 50B, 50C, and 50D and the hydraulic pipes 60A, 60B, and 60C, respectively. As a result, an increase in the space required for installing the fuel device group 40 is suppressed.

In addition, since the fuel pipes 40A and 40B and the hydraulic pipes 60A, 60B, and 60C are not interposed between the high-voltage devices included in the high-voltage device group 50, an increase in the interval between the high-voltage devices due to the fuel pipes 40A and 40B and the hydraulic pipes 60A, 60B, and 60C is suppressed. Specifically, the interval between the inverter 51 and the electric motor 52 disposed adjacently to each other, the interval between the battery 53 and the repeater 55 disposed adjacently to each other, the interval between the repeater 55 and the inverter 51 disposed adjacently to each other, the interval between the repeater 55 and the converter 54 disposed adjacently to each other, and the interval between the inverter 51 and the converter 54 disposed adjacently to each other are prevented from increasing due to the fuel pipes 40A and 40B and the hydraulic pipes 60A, 60B, and 60C, respectively. As a result, an increase in the space required for installing the high-voltage device group 50 is suppressed.

Furthermore, since the fuel pipes 40A and 40B and the high-voltage cables 50A, 50B, 50C, and 50D are not interposed between the hydraulic devices included in the hydraulic device group 60, an increase in the interval between the hydraulic devices due to the fuel pipes 40A and 40B and the high-voltage cables 50A, 50B, 50C, and 50D is suppressed. Specifically, an increase in the interval between the hydraulic oil tank 61 and the hydraulic pump 62 disposed adjacently to each other and the interval between the control valve 63 and the hydraulic motor 64 disposed adjacently to each other due to the fuel pipes 40A and 40B and the high-voltage cables 50A, 50B, 50C, and 50D is suppressed. As a result, an increase in the space required for installing the hydraulic device group 60 is suppressed.

Therefore, in the present embodiment having the first feature, the fuel device group 40, the high-voltage device group 50, and the hydraulic device group 60 can be efficiently disposed in a limited space on the slewing frame 20.

The inter-fuel device space 40S is a space between two fuel devices. Specifically, the inter-fuel device space is a space between a lower surface of the upper fuel device and an upper surface of the lower fuel device when the two fuel devices are disposed side by side in the vertical direction, the inter-fuel device space is a space between a right side surface of the left fuel device and a left side surface of the right fuel device when the two fuel devices are disposed side by side in the left-right direction, and the inter-fuel device space is a space between a rear surface of the front fuel device and a front surface of the rear fuel device when the two fuel devices are disposed side by side in the front-rear direction.

The high-voltage inter-device space 50S is a space between two high-voltage devices. Specifically, the high-voltage inter-device space is a space between a lower surface of the upper high-voltage device and an upper surface of the lower high-voltage device when the two high-voltage devices are disposed side by side in the vertical direction, the high-voltage inter-device space is a space between a right side surface of the left high-voltage device and a left side surface of the right high-voltage device when the two high-voltage devices are disposed side by side in the left-right direction, and the high-voltage inter-device space is a space between a rear surface of the front high-voltage device and a front surface of the rear high-voltage device when the two high-voltage devices are disposed side by side in the front-rear direction.

The hydraulic inter-device space 60S is a space between two hydraulic devices. Specifically, the hydraulic inter-device space is a space between a lower surface of the upper hydraulic device and an upper surface of the lower hydraulic device when the two hydraulic devices are disposed side by side in the vertical direction, the hydraulic inter-device space is a space between a right side surface of the left hydraulic device and a left side surface of the right hydraulic device when the two hydraulic devices are disposed side by side in the left-right direction, and the hydraulic inter-device space is a space between a rear surface of the front hydraulic device and a front surface of the rear hydraulic device when the two hydraulic devices are disposed side by side in the front-rear direction.

In the present embodiment, as illustrated in FIGS. 6 and 12, in the machine chamber 14, an inter-fuel device space 40S between the hydrogen tank 41 and the fuel cell device 42 and an inter-fuel device space 40S between the hydrogen tank 41 and the hydrogen filling port 43 are formed.

In the present embodiment, as illustrated in FIGS. 5 and 12, a high-voltage inter-device space 50S between the inverter 51 and the electric motor 52, a high-voltage inter-device space 50S between the battery 53 and the repeater 55, a high-voltage inter-device space 50S between the repeater 55 and the inverter 51, a high-voltage inter-device space 50S between the repeater 55 and the converter 54, and a high-voltage inter-device space 50S between the inverter 51 and the converter 54 are formed in the machine chamber 14.

In the present embodiment, as illustrated in FIGS. 5 and 12, in the machine chamber 14, a hydraulic inter-device space 60S between the hydraulic oil tank 61 and the hydraulic pump 62 and a hydraulic inter-device space 60S between the control valve 63 and the hydraulic motor 64 are formed. In the present embodiment, the hydraulic-related area 600 includes a first hydraulic-related area 600A and a second hydraulic-related area 600B, the hydraulic oil tank 61 and the hydraulic pump 62 are disposed in the first hydraulic-related area 600A, and the control valve 63 and the hydraulic motor 64 are disposed in the second hydraulic-related area 600B. In the specific example illustrated in FIG. 5, the first hydraulic-related area 600A is located at the right front portion of the slewing frame 20, and the second hydraulic-related area 600B is located at the front portion at the center in the left-right direction of the slewing frame 20. When the first hydraulic-related area 600A and the second hydraulic-related area 600B are adjacent to each other, the hydraulic inter-device space 60S may include a hydraulic inter-device space between a hydraulic device (for example, the hydraulic pump 62) disposed in the first hydraulic-related area 600A and a hydraulic device (for example, the hydraulic motor 64) disposed in the second hydraulic-related area 600B. For example, the hydraulic pipe 60B may be disposed so as to be inserted into a through hole provided in the standing plate 23 of the standing body 22 to connect the hydraulic pump 62 and the control valve 63.

### [Second Feature]

The work machine 100 according to the present embodiment has the following second feature. Each of the fuel pipes 40A and 40B is disposed at a position offset from the high-voltage-related area 500 where the high-voltage device group 50 and the high-voltage cables 50A, 50B, 50C, and 50D are disposed, and is disposed at a position offset from the hydraulic-related area 600 where the hydraulic device group 60 and the hydraulic pipes 60A, 60B, and 60C are disposed. Each of the high-voltage cables 50A, 50B, 50C, and 50D is disposed at a position offset from the fuel-related area 400 where the fuel device group 40 and the fuel pipes 40A and 40B are disposed, and is disposed at a position offset from the hydraulic-related area 600. Each of the hydraulic pipes 60A, 60B, and 60C is disposed at a position offset from the fuel-related area 400 and is disposed at a position offset from the high-voltage-related area 500.

In the present embodiment having the second feature, since the high-voltage cables 50A, 50B, 50C, and 50D and the hydraulic pipes 60A, 60B, and 60C are not disposed in the fuel-related area 400, not only the interval between the fuel devices is prevented from increasing due to the high-voltage cables 50A, 50B, 50C, and 50D and the hydraulic pipes 60A, 60B, and 60C, but also the length of each of the fuel pipes 40A and 40B is prevented from increasing due to the high-voltage cables 50A, 50B, 50C, and 50D and the hydraulic pipes 60A, 60B, and 60C. This suppresses an increase in size of the fuel-related area 400.

In addition, since the fuel pipes 40A and 40B and the hydraulic pipes 60A, 60B, and 60C are not disposed in the high-voltage-related area 500, not only an increase in the interval between the high-voltage devices due to the fuel pipes 40A and 40B and the hydraulic pipes 60A, 60B, and 60C is suppressed, but also an increase in the length of each of the high-voltage cables 50A, 50B, 50C, and 50D due to the fuel pipes 40A and 40B and the hydraulic pipes 60A, 60B, and 60C is suppressed. This prevents the high-voltage-related area 500 from becoming large.

Furthermore, since the fuel pipes 40A and 40B and the high-voltage cables 50A, 50B, 50C, and 50D are not disposed in the hydraulic-related area 600, not only an increase in the interval between the hydraulic devices due to the fuel pipes 40A and 40B and the high-voltage cables 50A, 50B, 50C, and 50D is suppressed, but also an increase in the length of each of the hydraulic pipes 60A, 60B, and 60C due to the fuel pipes 40A and 40B and the high-voltage cables 50A, 50B, 50C, and 50D is suppressed. This suppresses an increase in the hydraulic-related area 600.

Therefore, in the present embodiment having the second feature, the fuel device group 40, the high-voltage device group 50, and the hydraulic device group 60 are more efficiently disposed in a limited space on the slewing frame 20.

The fuel-related area 400 may include an area occupied by the fuel device included in the fuel device group 40, an area occupied by the fuel pipe, and an inter-fuel device space 40S. The fuel pipe may be disposed in the inter-fuel device space 40S, or a part or all of the fuel pipe may be disposed at a position offset from the inter-fuel device space 40S. When a part or all of the fuel pipe is disposed at a position offset from the inter-fuel device space 40S, the fuel-related area 400 may include an area occupied by the fuel device included in the fuel device group 40, an area occupied by the fuel pipe, the inter-fuel device space 40S, and a space between the fuel pipe and the fuel device disposed adjacent to each other.

The high-voltage-related area 500 may include an area occupied by the high-voltage devices included in the high-voltage device group 50, an area occupied by the high-voltage cable, and a high-voltage inter-device space 50S. The high-voltage cable may be disposed in the high-voltage inter-device space 50S, or a part or all of the high-voltage cable may be disposed at a position offset from the high-voltage inter-device space 50S. When a part or all of the high-voltage cable is disposed at a position offset from the high-voltage inter-device space 50S, the high-voltage-related area 500 may include an area occupied by the high-voltage devices included in the high-voltage device group 50, an area occupied by the high-voltage cables, the high-voltage inter-device space 50S, and a space between the high-voltage cable and the high-voltage device disposed adjacent to each other.

The hydraulic-related area 600 may include an area occupied by hydraulic devices included in the hydraulic device group 60, an area occupied by the hydraulic pipe, and a hydraulic inter-device space 60S. The hydraulic pipe may be disposed in the hydraulic inter-device space 60S, or a part or all of the hydraulic pipe may be disposed at a position offset from the hydraulic inter-device space 60S. When a part or all of the hydraulic pipe is disposed at a position offset from the hydraulic inter-device space 60S, the hydraulic-related area 600 may include an area occupied by the hydraulic devices included in the hydraulic device group 60, an area occupied by the hydraulic pipe, the hydraulic inter-device space 60S, and a space between the hydraulic pipe and the hydraulic device disposed adjacent to each other.

### [Third Feature]

The work machine 100 according to the present embodiment has the following third feature. The fuel device group 40 is disposed at a position offset from the high-voltage-related area 500 and the hydraulic-related area 600, the high-voltage device group 50 is disposed at a position offset from the fuel-related area 400 and the hydraulic-related area 600, and the hydraulic device group 60 is disposed at a position offset from the fuel-related area 400 and the high-voltage-related area 500.

In the present embodiment having the third feature, not only the high-voltage cables 50A, 50B, 50C, and 50D and the hydraulic pipes 60A, 60B, and 60C but also the high-voltage device group 50 and the hydraulic device group 60 are not disposed in the fuel-related area 400, not only the fuel pipes 40A and 40B and the hydraulic pipes 60A, 60B, and 60C but also the fuel device group 40 and the hydraulic device group 60 are not disposed in the high-voltage-related area 500, and not only the fuel pipes 40A and 40B and the high-voltage cables 50A, 50B, 50C, and 50D but also the fuel device group 40 and the high-voltage device group 50 are not disposed in the hydraulic-related area 600. That is, the fuel-related area 400, the high-voltage-related area 500, and the hydraulic-related area 600 are clearly divided. As a result, as illustrated in FIG. 5, in each of the fuel-related area 400, the high-voltage-related area 500, and the hydraulic-related area 600, a device group and a connection member (fuel pipe, high-voltage cable, or hydraulic pipe) in the area can be collectively disposed. This enables the fuel device group 40, the high-voltage device group 50, and the hydraulic device group 60 to be disposed more efficiently.

In the plan view of FIG. 5, a part of the fuel-related area 400 indicated by an alternate long and short dash line and a part of the high-voltage-related area 500 indicated by an alternate long and short dash line are drawn so as to overlap each other, but these parts are actually disposed at positions offset from each other in the vertical direction as illustrated in FIGS. 6 and 7.

### [Fourth Feature]

The work machine 100 according to the present embodiment has the following fourth feature. As illustrated in FIGS. 6 and 7, the hydrogen tank 41 is disposed at a position higher than the high-voltage device group 50. The hydrogen tank 41 is disposed at a position higher than the hydraulic device group 60.

In the present embodiment having the fourth feature, since the hydrogen tank 41 is disposed at a position higher than the high-voltage device group 50 and the hydraulic device group 60, even if leakage of hydrogen gas occurs, the hydrogen gas moves upward in a direction opposite to the direction (downward) toward the high-voltage device group 50 and the hydraulic device group 60 and is discharged to the outside of the work machine 100.

### [Fifth Feature]

The work machine 100 according to the present embodiment has the following fifth feature. As illustrated in FIGS. 3, 4, and 6, the outer wall 13 includes a fuel device group cover 131 that covers the upper portion of the hydrogen tank 41, and one or more openings 19 are formed in the fuel device group cover 131.

In the present embodiment having the fifth feature, the fuel device group cover 131 covering the upper portion of the fuel device group 40 (specifically, the hydrogen tank 41) can suppress exposure of the hydrogen tank 41 and the fuel cell device 42 to foreign matters such as rainwater and dust, and even if leakage of hydrogen gas occurs, the hydrogen gas moves upward in the air and is easily discharged to the outside of the work machine 100 through the opening 19 of the fuel device group cover 131.

The work machine 100 according to the present embodiment further has the following features. As illustrated in FIG. 6, the hydrogen tank 41 is disposed downstream of the high-voltage device group 50 in the flow direction of the cooling air CA.

In the present embodiment having this feature, even if leakage of hydrogen gas occurs, the hydrogen gas moves along the flow direction of the cooling air CA in a direction (left) opposite to the direction (right) toward the high-voltage device group 50 and is discharged to the outside of the work machine 100.

The work machine 100 according to the present embodiment may further have the following features. That is, the hydrogen tank 41 may be disposed downstream of the hydraulic device group 60 in the flow direction of the cooling air CA. In this case, even if leakage of hydrogen gas occurs, the hydrogen gas moves along the flow direction of the cooling air CA in a direction opposite to the direction toward the hydraulic device group 60 and is discharged to the outside of the work machine.

The work machine 100 according to the present embodiment may further have the following features. That is, the fuel device group 40 may be disposed at a height equal to or higher than the height at which the high-voltage device group 50 is disposed. In other words, the fuel device group 40 may not be disposed below the high-voltage device group 50. In the present embodiment having this feature, since the fuel device group 40 is not disposed below the high-voltage device group 50, even if leakage of hydrogen gas occurs, the hydrogen gas moves upward in the air without being disturbed by the high-voltage device group 50 and is discharged to the outside of the work machine 100. In the present embodiment, as illustrated in FIG. 5, the high-voltage device group 50 and the hydraulic device group 60 may be disposed at positions offset from each other in the horizontal direction. In other words, the high-voltage device group 50 and the hydraulic device group 60 may be disposed so as not to overlap each other in plan view.

The work machine 100 according to the present embodiment may further have the following features. That is, the fuel device group 40 is preferably disposed at a height equal to or higher than the height at which the hydraulic device group 60 is disposed. In other words, it is preferable that the fuel device group 40 is not disposed below the hydraulic device group 60. In this case, since the fuel device group 40 is not disposed below the hydraulic device group 60, even if leakage of hydrogen gas occurs, the hydrogen gas moves upward in the air without being hindered by the hydraulic device group 60 and is discharged to the outside of the work machine 100.

### [First Modification]

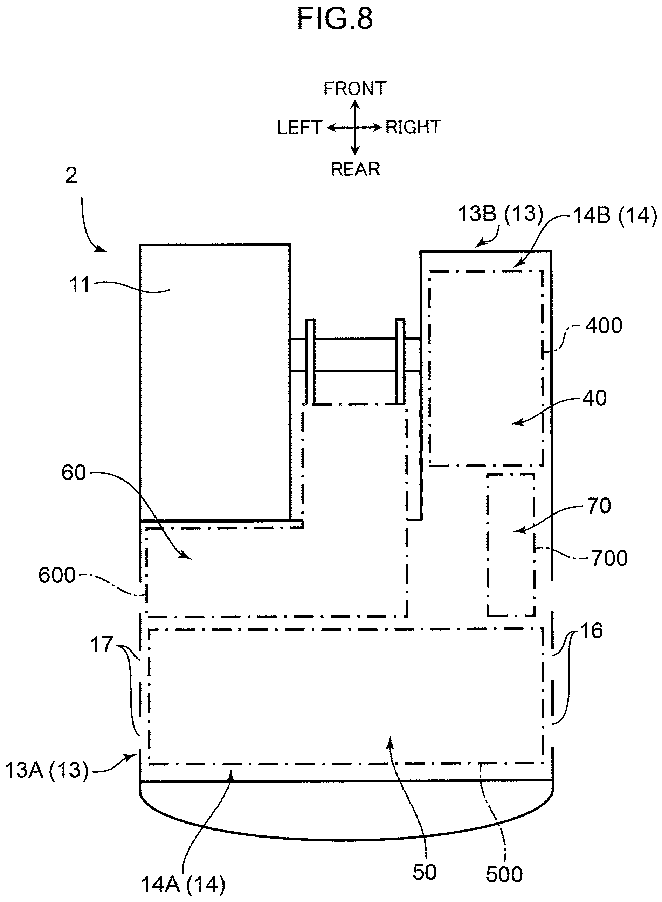

Next, a work machine 100 according to a first modification of the present embodiment will be described. FIG. 8 is a plan view illustrating the inside of the machine chamber 14 in the work machine 100 according to the first modification.

As illustrated in FIG. 8, in the work machine 100 according to the first modification, the cooling-related area 700 is interposed between the fuel-related area 400 and the high-voltage-related area 500. That is, the cooling device group 70 in the cooling-related area 700 is disposed between the fuel device group 40 in the fuel-related area 400 and the high-voltage device group 50 in the high-voltage-related area 500. In the first modification, the fuel-related area 400 in which the fuel device group 40 is disposed and the high-voltage-related area 500 in which the high-voltage device group 50 is disposed can be divided by the cooling device group 70 in the cooling-related area 700. A device group other than the cooling device group 70 in the cooling-related area 700 may be disposed between the fuel device group 40 in the fuel-related area 400 and the high-voltage device group 50 in the high-voltage-related area 500. Another device group such as the cooling device group 70 may be disposed between the fuel device group 40 and the hydraulic device group 60. In this case, the fuel-related area 400 in which the fuel device group 40 is disposed and the hydraulic-related area 600 in which the hydraulic device group 60 is disposed can be divided by the another device group.

### [Second Modification]

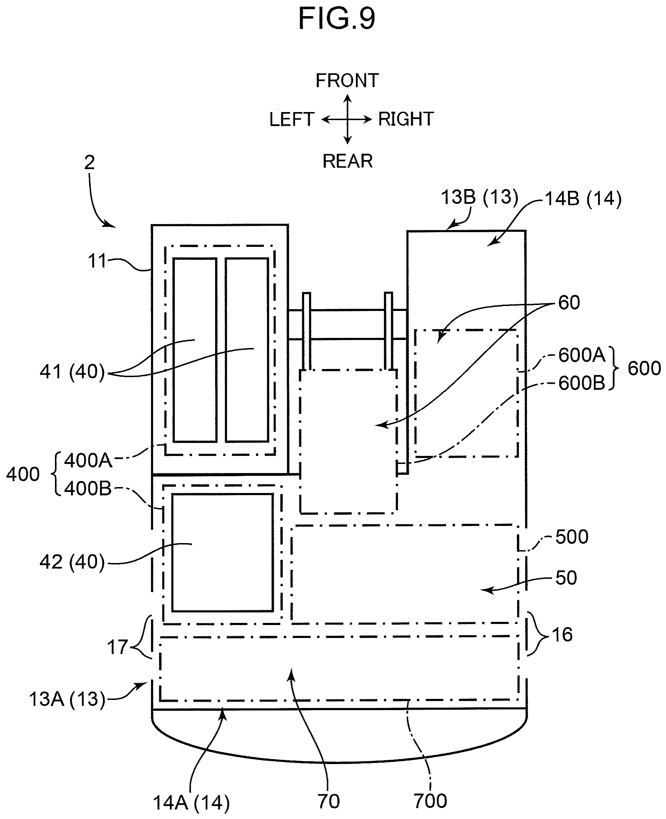

Next, a work machine 100 according to a second modification of the present embodiment will be described. FIG. 9 is a plan view illustrating the inside of a machine chamber 14 in the work machine 100 according to the second modification.

As illustrated in FIG. 9, in the work machine 100 according to the second modification, the fuel cell device 42 of the fuel device group 40 is disposed inside the machine chamber 14, while the hydrogen tank 41 of the fuel device group 40 is disposed on the cab 11. In this first modification, since a margin is generated in the space inside the machine chamber 14, other devices can be easily disposed in the machine chamber 14.

### [Third Modification]

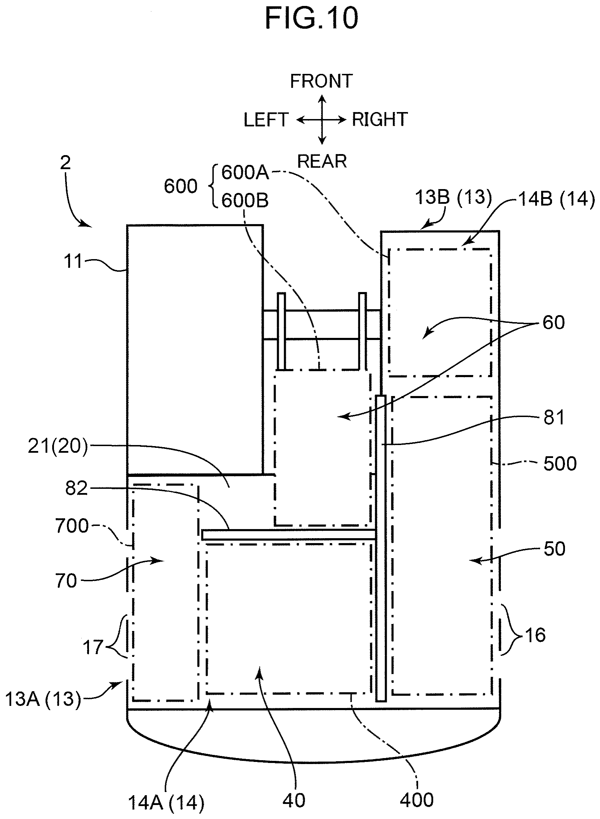

Next, a work machine 100 according to a third modification of the present embodiment will be described. FIG. 10 is a plan view illustrating the inside of a machine chamber 14 of the work machine 100 according to the third modification.

As illustrated in FIG. 10, the work machine 100 according to the third modification includes a partition wall 81 and a partition wall 82. The partition wall 81 is a member disposed between the fuel device group 40 and the high-voltage device group 50, and the partition wall 82 is a member disposed between the fuel device group 40 and the hydraulic device group 60. Each of the partition wall 81 and the partition wall 82 is disposed in a posture standing upward from the frame body 21 of the slewing frame 20. In the third modification, the fuel-related area 400 in which the fuel device group 40 is disposed and the high-voltage-related area 500 in which the high-voltage device group 50 is disposed can be partitioned by the partition wall 81, and the fuel-related area 400 in which the fuel device group 40 is disposed and the hydraulic-related area 600 in which the hydraulic device group 60 is disposed can be partitioned by the partition wall 82. In the third modification, one of the partition wall 81 and the partition wall 82 can be omitted.

### [Fourth Modification]

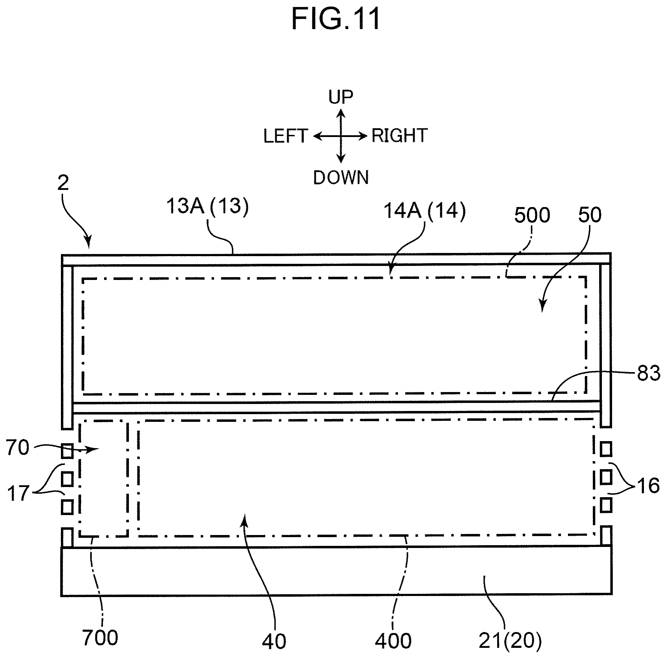

Next, a work machine 100 according to a fourth modification of the present embodiment will be described. FIG. 11 is a rear view illustrating the inside of the machine chamber 14 in the work machine 100 according to the fourth modification.

As illustrated in FIG. 11, the work machine 100 according to the fourth modification includes a partition wall 83. In the fourth modification, the fuel device group 40 is disposed below the high-voltage device group 50, and the partition wall 83 is disposed between the fuel device group 40 and the high-voltage device group 50. Accordingly, the fuel-related area 400 in which the fuel device group 40 is disposed and the high-voltage-related area 500 in which the high-voltage device group 50 is disposed can be vertically divided by the partition wall 81.

In the fourth modification, the intake port 16 and the exhaust port 17 are formed in a portion of the outer wall 13 corresponding to the fuel-related area 400, and the cooling device group 70 is disposed between the fuel device group 40 and the exhaust port 17.

### [Fifth Modification]

Next, a work machine 100 according to a fifth modification of the present embodiment will be described.

The work machine 100 according to the fifth modification has the following features. That is, the work machine 100 according to the fifth modification includes a fuel device group 40 including the hydrogen tank 41, the fuel cell device 42, and the hydrogen filling port 43, a high-voltage device group 50, and a hydraulic device group 60, and the fuel device group 40 is disposed at a height equal to or higher than the height at which the high-voltage device group 50 is disposed. The work machine 100 according to the fifth modification is similar to the work machine 100 according to the embodiment illustrated in FIGS. 1 to 7 in terms of having this feature, and other configurations of the work machine 100 according to the fifth modification may be different from those of the work machine 100 according to the embodiment illustrated in FIGS. 1 to 7.

In the fifth modification, since the fuel device group 40 is not disposed below the high-voltage device group 50, even if leakage of hydrogen occurs, the hydrogen gas moves upward in the air without being disturbed by the high-voltage device group 50 and is discharged to the outside of the work machine 100.

In the fifth modification, the fuel device group 40 may be disposed at a height equal to or higher than the height at which the hydraulic device group 60 is disposed. In this case, since the fuel device group 40 is not disposed below the hydraulic device group 60, even if leakage of hydrogen gas occurs, the hydrogen gas moves upward in the air without being hindered by the hydraulic device group 60 and is discharged to the outside of the work machine 100. In the fifth modification, the high-voltage device group 50 and the hydraulic device group 60 may be disposed at positions offset from each other in the horizontal direction. In other words, the high-voltage device group 50 and the hydraulic device group 60 may be disposed so as not to overlap each other in plan view.

In the fifth modification, the hydrogen tank 41 is preferably disposed at a position higher than the high-voltage device group 50 and the hydraulic device group 60. In this case, even if leakage of hydrogen gas occurs, the hydrogen gas moves upward in a direction opposite to the direction toward the high-voltage device group 50 and the hydraulic device group 60 and is discharged to the outside of the work machine.

### [Other modifications]

The embodiments of the present disclosure have been described above, but the present disclosure is not limited to the embodiments, and further includes the following modifications, for example.

In the embodiment and the modifications, the inverter 51 is an example of the first high-voltage device, the electric motor 52 is an example of the second high-voltage device, the hydraulic oil tank 61 is an example of the first hydraulic device, and the hydraulic pump 62 is an example of the second hydraulic device. However, at least one of the first high-voltage device and the second high-voltage device is not limited to the inverter 51 and the electric motor 52 which are the specific examples described in the above embodiment, and may be other high-voltage devices such as the battery 53, the converter 54, and the repeater 55. At least one of the first hydraulic device and the second hydraulic device is not limited to the hydraulic oil tank 61 and the hydraulic pump 62 which are the specific examples described in the above embodiment, and may be other hydraulic devices such as the control valve 63 and the hydraulic motor 64.

In the above embodiment and modifications, the high-voltage device group 50 includes the repeater 55 (junction box 55), but the repeater 55 is not essential and can be omitted. When the repeater 55 is omitted, the inverter 51 may be directly connected to the fuel cell device 42 via the power supply cable 101, or may be directly connected to the battery 53 via the high-voltage cable 50A. Similarly, the converter 54 may be directly connected to the fuel cell device 42 via a power supply cable, or may be directly connected to the battery 53 via a high-voltage cable.

### [Summary of embodiments]

As described above, according to the present disclosure, there is provided the work machine according to the first to sixteenth aspects, in which the hydraulic device group, the fuel device group, and the high-voltage device group can be efficiently disposed in a limited space on the slewing frame.

A work machine according to a first aspect includes a fuel device group that includes a fuel tank and a fuel cell device, a high-voltage device group that includes a first high-voltage device and a second high-voltage device, a hydraulic device group that includes a first hydraulic device and a second hydraulic device, a fuel pipe that connects the fuel tank and the fuel cell device, a high-voltage cable that connects the first high-voltage device and the second high-voltage device, and a hydraulic pipe that connects the first hydraulic device and the second hydraulic device, in which the fuel pipe is disposed at a position offset from a high-voltage inter-device space between the first high-voltage device and the second high-voltage device and a hydraulic inter-device space between the first hydraulic device and the second hydraulic device, the high-voltage cable is disposed at a position offset from an inter-fuel device space between the fuel tank and the fuel cell device and the hydraulic inter-device space, and the hydraulic pipe is disposed at a position offset from the inter-fuel device space and the high-voltage inter-device space.

In a first aspect, since the high-voltage cable and the hydraulic pipe are not interposed between the fuel tank and the fuel cell device, an increase in the interval between the fuel cell device and the fuel tank due to the high-voltage cable and the hydraulic pipe is suppressed, whereby an increase in the space required for installing the fuel device group is suppressed. In addition, since the fuel pipe and the hydraulic pipe are not interposed between the first high-voltage device and the second high-voltage device, it is possible to suppress an increase in the interval between the first high-voltage device and the second high-voltage device due to the fuel pipe and the hydraulic pipe, thereby suppressing an increase in the space required for installing the high-voltage device group. Furthermore, since the fuel pipe and the high-voltage cable are not interposed between the first hydraulic device and the second hydraulic device, an increase in the interval between the first hydraulic device and the second hydraulic device due to the fuel pipe and the high-voltage cable is suppressed, whereby an increase in the space required for installing the hydraulic device group is suppressed. Therefore, in the first aspect, the fuel device group, the high-voltage device group, and the hydraulic device group can be efficiently disposed in a limited space on the slewing frame.

In a second aspect, the work machine according to the first aspect preferably further includes the following configuration. That is, in the work machine according to the second aspect, it is preferable that the fuel pipe is disposed at a position offset from a high-voltage-related area in which the high-voltage device group and the high-voltage cable are disposed and a hydraulic-related area in which the hydraulic device group and the hydraulic pipe are disposed, the high-voltage cable is disposed at a position offset from a fuel-related area, where the fuel device group and the fuel pipe are disposed, and the hydraulic-related area, and the hydraulic pipe is disposed at a position offset from the fuel-related area and the high-voltage-related area. In the second aspect, since the high-voltage cable and the hydraulic pipe are not disposed in the fuel-related area, not only the increase in the interval between the fuel cell device and the fuel tank due to the high-voltage cable and the hydraulic pipe but also the increase in the length of the fuel pipe due to the high-voltage cable and the hydraulic pipe are suppressed, whereby the increase in the fuel-related area is suppressed. In addition, since the fuel pipe and the hydraulic pipe are not disposed in the high-voltage-related area, not only an increase in the interval between the first high-voltage device and the second high-voltage device due to the fuel pipe and the hydraulic pipe is suppressed, but also an increase in the length of the high-voltage cable due to the fuel pipe and the hydraulic pipe is suppressed, whereby an increase in the high-voltage-related area is suppressed. Furthermore, since the fuel pipe and the high-voltage cable are not disposed in the hydraulic-related area, not only the increase in the interval between the first hydraulic device and the second hydraulic device due to the fuel pipe and the high-voltage cable is suppressed, but also the increase in the length of the hydraulic pipe due to the fuel pipe and the high-voltage cable is suppressed, whereby the increase in the hydraulic-related area is suppressed. Therefore, in the second aspect, the fuel device group, the high-voltage device group, and the hydraulic device group are more efficiently disposed in a limited space on the slewing frame.

In a third aspect, the work machine according to the second aspect preferably further includes the following configuration. That is, in the work machine according to the third aspect, it is preferable that the fuel device group is disposed at a position offset from the high-voltage-related area and the hydraulic-related area, the high-voltage device group is disposed at a position offset from the fuel-related area and the hydraulic-related area, and the hydraulic device group is disposed at a position offset from the fuel-related area and the high-voltage-related area. In this third aspect, in the fuel-related area, not only the high-voltage cable and the hydraulic pipe are not disposed, but also the high-voltage device group and the hydraulic device group are not disposed. In the high-voltage-related area, not only the fuel pipe and the hydraulic pipe are not disposed, but also the fuel device group and the hydraulic device group are not disposed. In the hydraulic-related area, not only the fuel pipe and the high-voltage cable are not disposed, but also the fuel device group and the high-voltage device group are not disposed. That is, in the third aspect, the fuel-related area, the high-voltage-related area, and the hydraulic-related area are clearly divided. As a result, in each of these areas, the device group and the connection member (fuel pipe, high-voltage cable, or hydraulic pipe) in the area can be collectively disposed. This enables the fuel device group, the high-voltage device group, and the hydraulic device group to be disposed more efficiently.

In a fourth aspect, the work machine according to any one of the first to third aspects preferably further includes the following configuration. That is, in the work machine according to the fourth aspect, it is preferable that the fuel tank is a hydrogen tank that stores hydrogen, and the hydrogen tank is disposed at a position higher than the high-voltage device group and the hydraulic device group. In the fourth aspect, since the hydrogen tank is disposed at a position higher than the high-voltage device group and the hydraulic device group, even if leakage of hydrogen occurs, the hydrogen moves upward in a direction opposite to the direction toward the high-voltage device group and the hydraulic device group and is discharged to the outside of the work machine.

According to a fifth aspect, the work machine according to any one of the first to fourth aspects may further include the following configuration. That is, it is preferable that the work machine according to the fifth aspect further includes an outer wall, the fuel tank is a hydrogen tank that stores hydrogen, the outer wall includes a fuel device group cover that covers an upper portion of the fuel device group, and an opening is formed in the fuel device group cover. In the fifth aspect, the fuel device group cover covering the upper portion of the fuel device group can prevent the hydrogen tank and the fuel cell device from being exposed to foreign matters such as rainwater and dust, and even if leakage of hydrogen occurs, the hydrogen moves upward in the air and is easily discharged to the outside of the work machine through the opening of the fuel device group cover.

According to a sixth aspect, the work machine according to any one of the first to fifth aspects preferably further includes the following configuration. That is, the work machine according to the sixth aspect may further include another device group disposed between the fuel device group and the high-voltage device group. In the sixth aspect, the area in which the fuel device group is disposed and the area in which the high-voltage device group is disposed can be divided by the another device group.

According to a seventh aspect, the work machine according to any one of the first to sixth aspects preferably further includes the following configuration. That is, the work machine according to the seventh aspect may further include another device group disposed between the fuel device group and the hydraulic device group. In the seventh aspect, the area in which the fuel device group is disposed and the area in which the hydraulic device group is disposed can be divided by the another device group.

According to an eighth aspect, the work machine according to any one of the first to seventh aspects may further include the following configuration. That is, the work machine according to the eighth aspect preferably further includes a partition wall disposed between the fuel device group and the high-voltage device group. In the eighth aspect, the area in which the fuel device group is disposed and the area in which the high-voltage device group is disposed can be partitioned by the partition wall.

According to a ninth aspect, the work machine according to any one of the first to eighth aspects may further include the following configuration. That is, the work machine according to the ninth aspect preferably further includes a partition wall disposed between the fuel device group and the hydraulic device group. In the ninth aspect, the area in which the fuel device group is disposed and the area in which the hydraulic device group is disposed can be partitioned by the partition wall.

According to a tenth aspect, the work machine according to any one of the first to ninth aspects may further include the following configuration. That is, it is preferable that the work machine according to the tenth aspect further includes a cooling fan that forms a flow of cooling air, in which the fuel tank is a hydrogen tank that stores hydrogen, and the hydrogen tank is disposed downstream of the high-voltage device group in a flow direction of the cooling air. In the tenth aspect, even if leakage of hydrogen occurs, the hydrogen moves along the flow direction of the cooling air in the direction opposite to the direction toward the high-voltage device group and is discharged to the outside of the work machine.

In an eleventh aspect, the work machine according to the tenth aspect may further include the following configuration. That is, in the work machine according to the eleventh aspect, the hydrogen tank is preferably disposed downstream of the hydraulic device group in the flow direction of the cooling air. In the eleventh aspect, even if leakage of hydrogen occurs, the hydrogen moves along the flow direction of the cooling air in the direction opposite to the direction toward the hydraulic device group and is discharged to the outside of the work machine.

According to a twelfth aspect, the work machine according to any one of the first to eleventh aspects preferably further includes the following configuration. That is, in the work machine according to the twelfth aspect, the fuel device group is preferably disposed at a height equal to or higher than a height at which the high-voltage device group is disposed. In other words, it is preferable that the fuel device group is not disposed below the high-voltage device group. In the twelfth aspect, since the fuel device group is not disposed below the high-voltage device group, even if the fuel tank is a hydrogen tank and leakage of hydrogen occurs, the hydrogen moves upward in the air and is discharged to the outside of the work machine without being disturbed by the high-voltage device group. In the twelfth aspect, the high-voltage device group and the hydraulic device group may be disposed at positions offset from each other in the horizontal direction. In other words, the high-voltage device group and the hydraulic device group may be disposed so as not to overlap each other in plan view.

In a thirteenth aspect, the work machine according to the twelfth aspect may further include the following configuration. That is, in the work machine according to the thirteenth aspect, the fuel device group is preferably disposed at a height equal to or higher than a height at which the hydraulic device group is disposed. In other words, it is preferable that the fuel device group is not disposed below the hydraulic device group. In the thirteenth aspect, since the fuel device group is not disposed below the hydraulic device group, even if leakage of hydrogen occurs, the hydrogen moves upward in the air without being hindered by the hydraulic device group and is discharged to the outside of the work machine.

A work machine according to a fourteenth aspect includes a fuel device group that includes a fuel tank and a fuel cell device, a high-voltage device group, and a hydraulic device group, in which the fuel device group is disposed at a height equal to or higher than a height at which the high-voltage device group is disposed. In the fourteenth aspect, since the fuel device group is not disposed below the high-voltage device group, even if the fuel tank is a hydrogen tank and leakage of hydrogen occurs, the hydrogen moves upward in the air and is discharged to the outside of the work machine without being disturbed by the high-voltage device group.

In a fifteenth aspect, the work machine according to the fourteenth aspect preferably further includes the following configuration. That is, in the work machine according to the fifteenth aspect, the fuel device group is preferably disposed at a height equal to or higher than a height at which the hydraulic device group is disposed. In the fifteenth aspect, since the fuel device group is not disposed below the hydraulic device group, even if leakage of hydrogen occurs, the hydrogen moves upward in the air without being hindered by the hydraulic device group and is discharged to the outside of the work machine. In the work machine according to the fifteenth aspect, the high-voltage device group and the hydraulic device group may be disposed at positions offset from each other in the horizontal direction. In other words, the high-voltage device group and the hydraulic device group may be disposed so as not to overlap each other in plan view.

According to a sixteenth aspect, the work machine according to the fourteenth or fifteenth aspect may further include the following configuration. That is, in the work machine according to the sixteenth aspect, it is preferable that the fuel tank is a hydrogen tank that stores hydrogen, and the hydrogen tank is disposed at a position higher than the high-voltage device group and the hydraulic device group. In the sixteenth aspect, since the hydrogen tank is disposed at a position higher than the high-voltage device group and the hydraulic device group, even if leakage of hydrogen occurs, the hydrogen moves upward in a direction opposite to the direction toward the high-voltage device group and the hydraulic device group and is discharged to the outside of the work machine.

## Claims

1. A work machine comprising:
a fuel device group that includes a fuel tank and a fuel cell device;
a high-voltage device group that includes a first high-voltage device and a second high-voltage device;
a hydraulic device group that includes a first hydraulic device and a second hydraulic device;
a fuel pipe that connects the fuel tank and the fuel cell device;
a high-voltage cable that connects the first high-voltage device and the second high-voltage device; and
a hydraulic pipe that connects the first hydraulic device and the second hydraulic device,
wherein the fuel pipe is disposed at a position offset from a high-voltage inter-device space between the first high-voltage device and the second high-voltage device and a hydraulic inter-device space between the first hydraulic device and the second hydraulic device,
the high-voltage cable is disposed at a position offset from an inter-fuel device space between the fuel tank and the fuel cell device and the hydraulic inter-device space, and
the hydraulic pipe is disposed at a position offset from the inter-fuel device space and the high-voltage inter-device space.

2. The work machine according to claim 1, wherein
the fuel pipe is disposed at a position offset from a high-voltage-related area in which the high-voltage device group and the high-voltage cable are disposed and a hydraulic-related area in which the hydraulic device group and the hydraulic pipe are disposed,
the high-voltage cable is disposed at a position offset from a fuel-related area, where the fuel device group and the fuel pipe are disposed, and the hydraulic-related area, and
the hydraulic pipe is disposed at a position offset from the fuel-related area and the high-voltage-related area.

3. The work machine according to claim 2, wherein
the fuel device group is disposed at a position offset from the high-voltage-related area and the hydraulic-related area,
the high-voltage device group is disposed at a position offset from the fuel-related area and the hydraulic-related area, and
the hydraulic device group is disposed at a position offset from the fuel-related area and the high-voltage-related area.

4. The work machine according to any one of claims 1 to 3, wherein
the fuel tank is a hydrogen tank that stores hydrogen, and
the hydrogen tank is disposed at a position higher than the high-voltage device group and the hydraulic device group.

5. The work machine according to any one of claims 1 to 4, further comprising an outer wall, wherein
the fuel tank is a hydrogen tank that stores hydrogen,
the outer wall is disposed so as to cover an upper portion of the fuel device group, and
an opening is formed in the outer wall.

6. The work machine according to any one of claims 1 to 5, further comprising another device group disposed between the fuel device group and the high-voltage device group.

7. The work machine according to any one of claims 1 to 6, further comprising another device group disposed between the fuel device group and the hydraulic device group.

8. The work machine according to any one of claims 1 to 7, further comprising a partition wall disposed between the fuel device group and the high-voltage device group.

9. The work machine according to any one of claims 1 to 8, further comprising a partition wall disposed between the fuel device group and the hydraulic device group.

10. The work machine according to any one of claims 1 to 9, further comprising a cooling fan that forms a flow of cooling air,
wherein the fuel tank is a hydrogen tank that stores hydrogen, and
the hydrogen tank is disposed downstream of the high-voltage device group in a flow direction of the cooling air.

11. The work machine according to claim 10, wherein the hydrogen tank is disposed downstream of the hydraulic device group in the flow direction of the cooling air.

12. The work machine according to any one of claims 1 to 11, wherein the fuel device group is disposed at a height equal to or higher than a height at which the high-voltage device group is disposed.

13. The work machine according to claim 12, wherein the fuel device group is disposed at a height equal to or higher than a height at which the hydraulic device group is disposed.

14. A work machine comprising:
a fuel device group that includes a fuel tank and a fuel cell device;
a high-voltage device group; and
a hydraulic device group,
wherein the fuel device group is disposed at a height equal to or higher than a height at which the high-voltage device group is disposed.

15. The work machine according to claim 14, wherein the fuel device group is disposed at a height equal to or higher than a height at which the hydraulic device group is disposed.

16. The work machine according to claim 14 or 15, wherein
the fuel tank is a hydrogen tank that stores hydrogen, and
the hydrogen tank is disposed at a position higher than the high-voltage device group and the hydraulic device group.
